# EUROPEAN PATENT APPLICATION

(11) **EP 0 739 920 A1**
(43) Date of publication of application: **30.10.1996**
(21) Application number: 96106385.6
(22) Date of filing: 23.04.1996
(51) Int. Cl.: C08G 59/42, C08J 5/24

(54) **Method of curing hot-curable resin and a body to be impregnated with hot-curable resin**

(30) Priority: 27.04.1995 US 429677
(71) Applicant: SIEMENS AKTIENGESELLSCHAFT, 80333 München (DE)
(72) Inventor: Schlottmann, Horst, 45468 Mülheim/Ruhr (DE); Schulten, Michael, Dr., 45468 Mülheim/Ruhr (DE)

(57) **Abstract**

A hot-curable resin preparation is formed of an epoxy resin and an acid anhydride and is cured by adding a water-soluble tetraalkylammonium halogenide and heat-treating the resin preparation mixed with the tetraalkylammonium halogenide. The water-soluble tetraalkylammonium halogenide may be a water-soluble tetraethylammonium halogenide, a water-soluble tetraalkylammonium bromide, or tetraethylammonium bromide. A porous body to be impregnated with the hot-curable resin preparation is prepared by wetting the body with and aqueous solution of the tetraalkylammonium halogenide and drying the wetted body.

## Description

The invention relates to a method of curing a hot-curable resin preparation comprising an epoxy resin and an acid anhydride, to a porous body impregnatable with a hot-curable resin preparation and a method to prepare such a body.

The invention in particular relates to an insulation in a large electric machine like a turbogenerator and its making by providing a porous body formed in the shape of the insulation to be made, the body containing an insulating material like mica in a fibrous matrix, impregnating the body with a hot-curable resin preparation and curing the preparation by a suitable heat treatment. Generally, the body is formed by winding a tape comprising a band made from fibers and having mica flakes fixed thereon around a structure to be insulated by the insulation to be made. The structure may be an electrically conductive component of a winding of the electric machine, in particular a winding rod.

A porous body for an insulation of an electrically conductive structural part of an electric machine may be impregnated with a resin preparation individually, prior to its mounting into an electric machine, or a major constituent part of an electric machine, in particular a stator with a stator winding, may be completely mounted with its electrically active structural parts parts having only the bodies of their insulations without resin impregnation, and the impregnation with the resin preparation being made afterwards to complete the insulations.

A resin preparation which has proved to be useful in making insulations for a large electric machine comprises an epoxy resin of the Bisphenol A-type and an acid anhydride like phthalic anhydride, succinic anhydride and maleic anhydride. Bisphenol A (C₁₅H₁₆O₂ - Merck Index 1324) is used in the production of epoxy resin. A "Bisphenol A-type" epoxy resin is an epoxy resin belonging to a class of compounds characterized by specific constitutional features which are particularly obtained in an epoxy resin made from Bisphenol A and another compound designated "epichlorohydrin" (C₃H₅ClO - Merck Index 3536). The Bisphenol A can be said to determine the basic geometrical structure of the epoxy resin molecules to be made, the epichlorohydrin supplies the functional groups of the epoxy type. These epoxy groups are essential for the curing of a resin preparation containing an epoxy resin and an acid anhydride, because the curing is effected by breaking up the epoxy groups and bonding them to acid anhydride molecules.

Curing of the resin preparation just described is effected by adding a compound called "accelerator" to the preparation and heating the preparation mixed with the accelerator to a sufficiently high temperature, which usually lies between 100°C and 200°C, in particular around 150°C. At such temperatures, the accelerator initiates a chemical reaction which binds the epoxy resin to the acid anhydride, thus building giant molecular structures which render the preparation hard instead of sticky and thus provide for the desired curing. Curing can also occur without an accelerator; such curing however takes a relatively long time and does not generally prevent storage of a resin preparation for several days without an accelerator added thereto.

The accelerator acts more or less like a catalyst and needs to be precent only in a minor amount to be effective. The efficiency of an accelerator is easily verified, since the chemical reactions which provide for the curing are exothermal and heat the resin preparation being cured considerably. Thereby, the occurrence of curing is proven. As the reactions providing the curing are exothermal, heating of a resin preparation to be cured is needed only to a temperature where the curing just sets in; further heating is then provided by the curing reactions themselves.

In making an insulation or other structural component for an electric machine from fibrous material like a textile band, it is a well-established practice to combine the accelerator into the fibrous material. This is usually done by wetting the material with a solution containing the accelerator in a suitable solvent and remove the solvent by drying.

Accelerators which have been widely used are metal naphthenates like zinc naphthenate and cobalt naphthenate. These compounds, however, are soluble only in organic solvents like halogenized hydrocarbons or plain hydrocarbons. Of these solvents, halogenized hydrocarbons are subject to severe handling restrictions due to environmental considerations; plain hydrocarbons are flammable and thus present no real alternative for halogenized hydrocarbons which are not flammable.

Accordingly, there is a need for a compound which is usable as an accelerator for curing a hot-curable resin preparation but which does not imply severe handling problems and does not pose an environmental hazard as the known accelerators.

It is accordingly an object of the invention to provide a method of curing hot-curable resin and a body to be impregnated with hot-curable resin, which overcomes the above-mentioned disadvantages of the heretofore-known devices and methods of this general type and which utilizes an accelerator in the context of such hot-curable resins which is safe and environmentally friendly both in its handling and in its disposal.

With the foregoing and other objects in view there is provided, in accordance with the invention, a method of curing a hot-curable resin preparation including an epoxy resin and an acid anhydride. The method comprises the steps of:
adding a water-soluble tetraalkylammonium halogenide to the resin preparation; and
heat-treating the resin preparation mixed with the tetraalkylammonium halogenide and curing the resin preparation.

In accordance with an added mode of the invention there is added a water-soluble tetraethylammonium halogenide, a tetraethylammonium bromide, or a water-soluble tetraalkylammonium bromide.

In accordance with an additional mode of the invention, a porous body is impregnated with the resin preparation mixed with the tetraalkylammonium halogenide prior to the heat-treating step; and the impregnated body is subsequently heat-treated to cure the resin preparation.

The impregnating step preferredly comprises: (1) wetting the porous body with an aqueous solution containing the tetraalkylammonium halogenide; (2) drying the wetted porous body; and
(3) impregnating the dried body with the resin preparation and mixing the resin preparation with the tetraalkylammonium halogenide.

In accordance with another mode of the invention, the body may be wetted by wetting the body with the aqueous solution containing a water-soluble coating agent; and the body may be dried by drying the coating agent and forming a coating containing the tetraalkylammonium halogenide on the body.

The porous body may be a substrate consisting essentially of at least one material selected from the group consisting of fibers and flakes.

In accordance with again another mode of the invention, the resin preparation is prepared by mixing the epoxy resin in the form of a Bisphenol A-type epoxy resin with the acid anhydride. The acid anhydride may be selected from the group consisting of phthalic anhydride, succinic anhydride and maleic anhydride.

With the above and other objects in view there is also provided, in accordance with the invention, a porous body to be impregnated with a hot-curable resin preparation and to be heat-treated for curing the resin preparation, the body containing a water-soluble tetraalkylammonium halogenide.

The tetraalkylammonium halogenide may be a tetraethylammonium halogenide, a tetraalkylammonium bromide, or a tetraethylammonium bromide.

In accordance with yet an added feature of the invention, the body has a water-soluble coating disposed on a surface thereof, and the tetraalkylammonium halogenide is contained in the water-soluble coating disposed on the surface of the body. The coating may be a water-soluble polyvinyl alcohol, and the body may be formed as a substrate of a material selected from the group consisting of fibers and flakes, for instance mica flakes and a network of fibers. The term 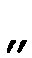 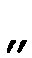 surface" as used here shall not be limited to refer to a surface in a macroscopic sense, like a surface of a fibrous band. Using the term here shall include a reference to a surface in a microscopic sense, like a surface of a fiber contained in a band. Equally, the term 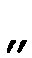 coating" may refer to a coating on a surface on a fiber in a band, as may be prepared by impregnating, not coating in a macroscopic sense, the band with an agent forming the coating.

In accordance with another feature of the invention, the network of fibers is a band made from fibers, and the band has the mica flakes fixed on it.

In accordance with yet a further feature of the invention, the body is incorporated in an electrical device and the cured resin preparation forms an insulator in an electrical insulation thereof.

With the above and other objects in view there is further provided, in accordance with the invention, a method of preparing a porous body for impregnation with a hot-curable resin preparation and subsequent heat-treatment for curing the resin preparation, the method which comprises: wetting the porous body with an aqueous solution containing a water-soluble tetraalkylammonium halogenide; and drying the wetted porous body.

In accordance with a concomitant mode of the invention, the wetting step comprises wetting the body with the aqueous solution containing a water-soluble coating agent; and the drying step comprises forming a coating from a coating agent on a surface of the body, the coating containing the tetraalkylammonium halogenide.

Other features which are considered as characteristic for the invention are set forth in the appended claims.

Although the invention is described herein as embodied in a method of curing hot-curable resin and a body to be impregnated with hot-curable resin, it is nevertheless not intended to be limited to the details shown, since various modifications and structural changes may be made therein without departing from the spirit of the invention and within the scope and range of equivalents of the claims.

The construction of the invention, however, together with additional objects and advantages thereof will be best understood from the following description of the specific exemplary embodiments.

### Example I:

To improve the stiffness of a winding head of a stator winding of a turbogenerator, the winding head being defined as a portion of the winding at an axial end thereof which is not embedded in a stator yoke, the portions of the winding in the winding head are tied together by cords made from glass or Nomex fibers. The fibrous body obtained from these tied-around cords and embedding the winding head is afterwards impregnated with an epoxy resin preparation, and the resin preparation is cured.

The accelerator used to effect the curing is a water-soluble compound, namely tetraethylammonium bromide. This accelerator is combined with the cords prior to their use in tying the winding head by wetting the cords with an aqueous solution consisting of 200 parts per weight of water, which is preferably deionized, two parts per weight of a polyvinyl alcohol and one part per weight of tetraethylammonium bromide. The wetted cords are subsequently dried to remove the water and to coat the fibers in the cords with a coating consisting of the polyvinyl alcohol and the accelerator. The polyvinyl alcohol provides a matrix which is well bonded to the fibers and firmly holds the accelerator, even if a chord is bent and/or strained as it is tied to the winding head.

The efficiency of tetraethylammonium bromide in curing an epoxy resin preparation has been verified by measurements of temperatures at a glass cord with fibers having the coating just described, being impregnated with the resin preparation and being heated to a temperature of about 100°C, where the curing of the resin preparation effected by the accelerator just starts. The curing provides for additional heating of the impregnated glass cord, leading to a considerable increase of its temperature. In experiment, a rise of temperature from the temperature at the onset of the curing reaction to about 160°C has been observed, demonstrating the efficiency of tetraethylammonium bromide used as an accelerator.

Tetraethylammonium bromide is particularly preffered because it is stable in vacuum and within a range of temperatures up to 280°C. Accordingly, there is no concern that the compound might decompose during a vacuum impregnation process wherein the resin compound to be cured is added under vacuum or during a curing process wherein the resin compound is cured and wherein a temperature rise to 200°C might occur, as explained hereinabove.

### Example II:

Another use of tetraethylammonium bromide is curing epoxy resin preparation impregnations of insulations of electrically conductive winding rods of a winding for a turbogenerator. Such insulations are expediently formed with tapes wound around the winding rods, the tapes containing mica flakes on a fibrous carrier. The mica flakes may be obtained directly from natural mica crystals spalled into sheets or flakes, or they may be present in the form of a paper-like mica preparation obtained from finely ground mica crystals. The fibrous carrier is usually a woven or felt-like textile made from glass or plastic fibers; it is also possible to employ Japan paper, cotton textile or the like. The tapes wound around the winding rods are subsequently impregnated with an epoxy resin preparation and the resin preparation is cured, alternatively before or after the winding rods are placed at their predetermined locations in the machine to be built.

Again, an accelerator must be provided to cure the resin preparation, and this accelerator is selected to be tetraethylammonium bromide or a similar compound and is combined with the tapes in the same way as it is combined with the glass cord as described earlier. This combination may be done by wetting a tape as a whole, or by wetting only the fibrous carrier or only the mica compound before the tape is completed.

In summary, the invention provides a novel and advantageous way of curing a hot-curable epoxy resin preparation by using an accelerator like tetraethylammonium bromide which is easy to handle, in particular by eliminating a need to use organic solvents whose use might be restricted and/or hazardous and requiring only water as a solvent.

## Claims

1. A method of curing a hot-curable resin preparation including an epoxy resin and an acid anhydride, the method which comprises:
adding a water-soluble tetraalkylammonium halogenide to the resin preparation; and
heat-treating the resin preparation mixed with the tetraalkylammonium halogenide and curing the resin preparation.

2. The method according to claim 1, wherein the adding step comprises adding a water-soluble tetraethylammonium halogenide.

3. The method according to claim 1, wherein the adding step comprises adding a water-soluble tetraalkylammonium bromide.

4. The method according to claim 1, wherein the adding step comprises adding tetraethylammonium bromide.

5. The method according to one of the preceding claims, which further comprises: impregnating a porous body with the resin preparation mixed with the tetraalkylammonium halogenide prior to the heat- treating step; and heat-treating the impregnated body to cure the resin preparation in the heat-treating step.

6. The method according to claim 5, wherein the step of impregnating comprises:
wetting the porous body with an aqueous solution containing the tetraalkylammonium halogenide;
drying the wetted porous body; and
impregnating the dried body with the resin preparation and mixing the resin preparation with the tetraalkylammonium halogenide.

7. The method according to claim 6, wherein the step of wetting the body comprises wetting the body with the aqueous solution containing a water-soluble coating agent; and the step of drying the wetted body comprises drying the coating agent and forming a coating containing the tetraalkylammonium halogenide on the body.

8. The method according to one of claims 5 to 7, which comprises providing the porous body having a substrate consisting essentially of at least one material selected from the group consisting of fibers and flakes.

9. The method according to one of the preceding claims, wherein the resin preparation is prepared by mixing the epoxy resin in the form of a Bisphenol A-type epoxy resin with the acid anhydride.

10. The method according to one of the preceding claims, wherein the resin preparation is prepared by mixing the epoxy resin with the acid anhydride, and the acid anhydride is selected from the group consisting of phthalic anhydride, succinic anhydride and maleic anhydride.

11. A porous body to be impregnated with a hot-curable resin preparation and to be heat-treated for curing the resin preparation, the body containing a water-soluble tetraalkylammonium halogenide.

12. The body according to claim 11, wherein said tetraalkylammonium halogenide is a tetraethylammonium halogenide.

13. The body according to claim 11, wherein said tetraalkylammonium halogenide is a tetraalkylammonium bromide.

14. The body according to claim 11, wherein said tetraalkylammonium halogenide is tetraethylammonium bromide.

15. The body according to one of claims 11 to 14, wherein said body includes a surface and a water-soluble coating disposed thereon, said tetraalkylammonium halogenide being contained in the water-soluble coating disposed on said surface of said body.

16. The body according to claim 15, wherein said coating comprises a water-soluble polyvinyl alcohol.

17. The body according to one of claims 11 to 16, comprising a substrate consisting essentially of at least one material selected from the group consisting of fibers and flakes.

18. The body according to claim 17, wherein said substrate comprises mica flakes and a network of fibers.

19. The body according to claim 18, wherein said network of fibers is a band made from fibers, and said band has said mica flakes fixed on it.

20. The body according to one of claims 17 to 19, wherein said cured resin preparation forms an insulator in an electrical insulation.

21. A method of preparing a porous body for impregnation with a hot-curable resin preparation and subsequent heat-treatment for curing the resin preparation, the method which comprises:
wetting the body with an aqueous solution containing a water-soluble tetraalkylammonium halogenide; and
drying the wetted porous body.

22. The method according to claim 21, wherein the wetting step comprises wetting the body with the aqueous solution containing a water-soluble coating agent; and the drying step comprises forming a coating from a coating agent on a surface of the body, the coating containing the tetraalkylammonium halogenide.
